Europäisches Patentamt

European Patent Office

Office européen des brevets

(19)

(11) Veröffentlichungsnummer: **0 000 902**
**B1**

(12) **EUROPÄISCHE PATENTSCHRIFT**

(21) Anmeldenummer: **78100631.7**

(51) Int. Cl.³: **C 01 B 21/14**

(22) Anmeldetag: **09.08.78**

(54) **Verfahren zur Herstellung von Hydroxylammoniumsalze**

(30) Priorität: **16.08.77 DE 2736872**

(43) Veröffentlichungstag der Anmeldung:
**07.03.79 Patentblatt 79/05**

(45) Bekanntmachung des Hinweises auf die Patenterteilung:
**23.07.80 Patentblatt 80/15**

(84) Benannte Vertragsstaaten:
**BE CH DE FR GB NL**

(56) Entgegenhaltungen:
**DE - A - 1 767 201**
**DE - A - 1 956 670**
**DE - A - 2 151 206**
**DE - B - 1 542 219**
**DE - B - 2 433 967**
**DE - C - 803 113**
**FR - A - 2 307 574**
**FR - A - 2 336 174**
**FR - A - 2 366 868**

**Chemie-Ingenieur-Technik; Jahrgang 46, August 1974, Weinheim**
**W. Hirner & H. Blenke "Stoffübergang in Gas/Flüssigkeits-Strahlreaktoren und Blasenkolonnen", Seite 353**

(73) Patentinhaber: **BASF Aktiengesellschaft**
**Carl-Bosch-Strasse 38**
**D - 6700 Ludwigshafen (DE)**

(72) Erfinder: **Rapp, Guenther, Dr.**
**Mundenheimer Strasse 174**
**D - 6700 Ludwigshafen (DE)**
**Thomas, Erwin**
**Borngasse 12**
**D - 6713 Freinsheim (DE)**
**Wolf, Dieter, Dr.**
**Auf der Wart 11**
**D - 6718 Gruenstadt 1 (DE)**
**Kuerten, Heribert**
**Oelbergstrasse 29**
**D - 6730 Neustadt 15 (DE)**
**Zehner, Peter, Dr.**
**Alwin-Mittasch-Platz 11**
**D - 6700 Ludwigshafen (DE)**

## Verfahren zur Herstellung von Hydroxylammoniumsalzen

Gegenstand der Erfindung ist ein Verfahren zur Herstellung von Hydroxylammoniumsalzen durch katalytische Reduktion von Stickstoffmonoxid mit Wasserstoff in verdünnten wäßrigen Lösungen von Mineralsäuren in Gegenwart von suspendierten Platinkatalysatoren bei erhöhter Temperatur, wobei man das Reaktionsgemisch im Kreis führt.

Die Herstellung von Hydroxylammoniumsalzen durch Reduktion von Stickstoffmonoxid mit Wasserstoff in verdünnten Mineralsäuren in Gegenwart von platinhaltigen Katalysatoren wird, wie z.B. in der DE—AS 24 47 972 beschrieben wird, in Rührbehältern durchgeführt. Hierbei erzielt man Raum-Zeit-Ausbeuten bis zu 0,43 Mol Stickstoffmonoxid pro Liter flüssiges Reaktionsgemisch in der Reaktionszone und Stunde. Die Nachteile der Rührbehälter sind technisch konstruktiv bedingt. Mit zunehmender Größe solcher Rührbehälter wird die Abdichtung der Rührwellendurchführung durch den Behälter zunehmend schwieriger. Die Behälter- und Deckelkonstruktion muß wesentlich aufwendiger ausgeführt werden, um Lasten von Rührergetriebe und Motor sowie die Rotationskräfte des Rührers aufnehmen zu können. Darüber hinaus muß die Apparateaufhängung verstärkt werden, um die Schwingungen des gesamten Systems abfangen zukönnen.

Dies führt zu technisch sehr aufwendigen Lösungen. Es wird deshalb angestrebt, eine möglichst hohe Raum-Zeit-Ausbeute mit kleinem Reaktionsvolumen möglichst ohne Verwendung von Rührvorrichtungen zu erzielen.

So ist aus der DE—AS 11 93 923 eine Arbeitsweise beschrieben, bei der die Umsetzung in einer Siebbodenkolonne durchgeführt wird, wobei man die die Reaktionslösung fortlaufend umpumpt. Nach dem aus den bekanntgemachten Unterlagen der NL-Patentanmeldung 69 08 934 bekannten Verfahren wird eine nach dem Mammutpumpenprinzip arbeitende Reaktionweise angewandt. Ferner ist aus der DE—OS 15 42 219 auch schon eine Arbeitsweise bekannt, bei der eine innige Gas-Flüssig-Feststoffvermischung durch Düsen bewirkt und die Dispersion tangential in die Reaktionszone eingeführt wird. Die vorstehend aufgeführten Arbeitsweisen sind hinsichtlich der erzielten Raum-Zeit-Ausbeuten noch verbesserungsbedürftig.

Es war deshalb die technische Aufgabe gestellt, bei der Synthese von Hydroxylammoniumsalzen durch katalytische Reduktion von Stickstoffmonoxid mit Wasserstoff die Raum-Zeit-Ausbeute bei den jeweils angewandten Drücken zu erhöhen und gleichzeitig die oben erwähnten Nachteile zu vermeiden.

Diese technische Aufgabe wird gelöst in einem Verfahren zur Herstellung von Hydroxylammoniumsalzen durch katalytische Reduktion von Stickstoffmonoxid mit Wasserstoff in verdünnten wäßrigen Lösungen von Mineralsäuren in Gegenwart von suspendierten Platinkatalysatoren bei erhöhter Temperatur unter Rückführung des Reaktionsgemisches, wobei man das im Gasraum oberhalb der Reaktionszone befindliche Stickstoffmonoxid und Wasserstoff enthaltende Gasgemisch durch mindestens einen von oben nach unten gerichteten, aus einer Düsenöffnung austretenden Flüssigkeitsstrahl der im Kreis geführten Reaktionsmischung, in mindestens eine sich in der Reaktionszone befindliche beidseitig offene Umlaufzone, die sich in Richtung des eintretenden Flüssigkeitsstrahles erstreckt und vollständig von der Reaktionslösung bedeckt ist, einbringt, das unten aus der Umlaufzone austretende nicht umgesetzte Gas enthaltende Reaktionsgemisch umlenkt, in der die Umlaufzone außen umgebenden ringförmigen Zone nach oben leitet und gleichzeitig aus einer unterhalb der Reaktionszone befindlichen Trennzone gasarmes Reaktionsgemisch zurückführt.

Das neue Verfahren hat den Vorteil, daß unter den jeweils angewandten Drücken bessere Raum-Zeit-Ausbeuten, bezogen auf Stickoxid erzielt werden. Dies beinhaltet, daß bei Vorrichtungen vorhandener Größe höhere Durchsätze erzielt werden, oder bei einem vorgegebenen Durchsatz kleinere Vorrichtungen gewählt werden können. Ferner hat das neue Verfahren den Vorteil, daß es auf einfache Weise in einen größeren Maßstab übertragen werden kann.

In der Regel hält man ein Molverhältnis von Wasserstoff : Stickstoffmonoxid von mehr als 1, vorzugsweise von 1,5 : 1 bis 6 : 1 ein. Besonders gute Ergebnisse erhält man, wenn man darauf achtet, daß in der Reaktionszone eine Molverhältnis von Wasserstoff : Stickstoffmonoxid von 3,5 bis 5 : 1 aufrecht erhalten wird.

Im allgemeinen verwendet man starke Mineralsäuren, wie Chlorwasserstoffsäure, Salpetersäure, Schwefelsäure oder Phosphorsäure. Geeignet sind auch deren saure Salze, wie Ammoniumbisulfat. Besonders bevorzugt wird Schwefelsäure verwendet. In der Regel geht man von 4 bis 6 normalen wäßrigen Säuren aus und läßt im Verlauf der Reaktion die Säurekonzentration nicht unter 0,2 normal fallen.

Die Umsetzung führt man vorzugsweise bei Temperaturen von 30 bis 80°C durch. Besonders bewährt haben sich Temperaturen von 40 bis 60°C. Die Umsetzung verläuft im allgemeinen bei Atmosphärendruck. Es hat sich jedoch als vorteilhaft herausgestellt, die Umsetzung unter erhöhtem Druck, z.B. bis zu 300 bar, durchzuführen.

Als Platinkatalysatoren werden vorteilhaft Trägerkatalysatoren verwendet; besonders bewährt haben sich Kohleträgerstoffe. Besondere technische Bedeutung haben Platin-Graphit-Trägerkatalysatoren erlangt. Vorteilhaft enthält ein solcher Katalysator 0,3 bis 5 Gew. % Platin. Die Trägerkatalysatoren liegen in feiner Verteilung vor, so daß sie im Reaktionsmedium suspendiert werden. Vorteilhaft enthalten die Katalysatoren zusätzlich ein oder mehrere Elemente der 5. und/oder 6. Hauptgruppe des periodischen Systems mit einem Atomgewicht >31, ferner Blei und/oder Quecksilber als vergiftende Mittel. Geeignete Katalysatoren und deren Herstellung werden beispielsweise beschrieben in der DE—PS 10 88 037, DE—PS 920 963, 956 038, 945 752. Auf einen Liter wäßrige Mineralsäure wendet man in der Regel 1 bis 400 g Platinträgerkatalysator an. Das im Gasraum oberhalb der Reaktionszone befindliche Wasserstoff und Stickstoffmonoxid enthaltende Gasgemisch wird durch mindestens einen, von oben nach unten gerichteten, aus einer Düsenöffnung austretenden Flüssigkeitsstrahl der im Kreis geführten Reaktionsmischung, die im wesentlichen aus wäßrigen Mineralsäure, Katalysator, gegebenenfalls aus bereits gebildeten Hydroxylammoniumsalzen und etwaigen Nebenprodukten sowie gelösten und/oder feinzerteilten Gasen besteht, in mindestens eine sich in der Reaktionszone befindliche, beidseitig offene Umlaufzone, die sich in Richtung des eintretenden Flüssigkeitsstrahls erstreckt und vollständig von der wäßrigen Reaktions-, mischung bedeckt ist, eingebracht. Das Gasgemisch kann neben Wasserstoff und Stickstoffmonoxid auch als Nebenprodukte entstehende Gase wie $N_2O$ sowie Inerte enthalten.

Es ist möglich, in eine Umlaufzone einen oder mehrere, z.B. drei Flüssigkeitsstrahlen einzuführen. Andererseits ist es bei der Vergrößerung von Reaktionszonen vorteilhaft, mehr als eine Umlaufzone zu benützen, z.B. eine zentrale Umlaufzone, die von sechs weiteren Umlaufzonen umgeben ist. In jede der Umlaufzonen wird dann mindestens ein Flüssigkeitsstrahl von oben nach unten gerichtet. Im einfachsten Fall ist die Umlaufzone ein senkrecht zentral in die Reaktionszone eingebrachtes Rohr. Die Umlaufzone oder Umlaufzonen sind beidseitig offen und erstrecken sich in Richtung des bzw. der eintretenden Flüssigkeitsstrahlen. Die Umlaufzone ist auch völlig vom Reaktionsgemisch bedeckt. Die Reaktionszone hat in der Regel ein Verhältnis von Höhe zu Durchmesser von 2 bis 30 : 1, vorzugsweise 5 bis 15 : 1. Das Durchmesserverhältnis von Umlaufzone zu Reaktionszone beträgt in der Regel etwa 0,7 bis 0,1 und liegt bevorzugt um 0,5.

Die Geschwindigkeit des eingeleiteten Flüssigkeitsstrahls beträgt vorteilhaft von 5 bis 40 m/sec, vorzugsweise von 10 bis 30 m/sec. Die Menge an zurückgeführter Reaktionslösung beträgt in der Regel von 10 bis 500, insbesondere 100 bis 400 $m^3/m^3$ der Reaktionszone und Stunde. Die Geschwindigkeit der Flüssigkeit in der Umlaufzone soll vorteilhaft um den Faktor 1 bis 6, vorzugsweise 2 bis 4 mal so groß sein wie in der die Umlaufzone umgebenden ringförmigen Zone. Auf diese Weise werden der Gasgehalt in der Umlaufzone und in der ringförmigen Zone etwa gleich groß und die Dichtedifferenzen klein.

Die Düsenöffnung hat vorteilhaft einen Abstand von dem oberen Ende der Umlaufzone, der das 0,1- bis 3-, vorzugsweise 0,3- bis 0,9-fache des Durchmessers der Umlaufzone beträgt.

Das unten aus der Umlaufzone austretende Reaktionsgemisch und das bis dorthin nicht verbrauchte Gasgemisch werden umgelenkt. Die Umlenkung wird bewirkt durch eine unterhalb der Umlaufzone quer angeordnete Umlenkplatte. Diese befindet sich vorteilhaft in einem Abstand vom unteren Ende der Umlaufzone, der das 0,1- bis 1,0-fache, vorzugsweise 0,2- bis 0,7-fache des Durchmessers der Umlaufzone beträgt. Nicht verbrauchtes Gasgemisch sowie ein Teil der Flüssigkeit steigen in der ringförmigen Zone, die die Umlaufzone umgibt, nach oben. Durch den von oben eintretenden Flüssigkeitsstrahl wird das flüssige Reaktionsgemisch wieder in der Umlaufzone nach unten bewegt und zugleich wird das sich oberhalb des Flüssigkeitsspiegels befindliche Gasgemisch durch den nach unten gerichteten Flüssigkeitsstrahl in die Umlaufzone eingebracht und fein verteilt.

Der Gaseintrag aus Gasphase oberhalb des Flüssigkeitsspiegels wird erfindungsgemäß durch Eintauchen des Düsenmundes der Düsenöffnung in die Flüssigkeit selbsttätig geregelt, d.h. wenn der Flüssigkeitsstand tiefer ist, wird mehr Gas eingetragen, bis der Flüssigkeitsstand ansteigt und umgekehrt, wenn der Flüssigkeitsstand sich über dem Düsenmund befindet, so wird weniger Gas eingetragen, so daß sich der Flüssigkeitsspiegel senkt. Auf diese Weise läßt sich auf einfache Weise auch der Gehalt an feinverteilten Gasblasen im Reaktionsgemisch regeln. Dies geschieht zweckmäßig so, daß man nach Ingangsetzen der Umwälzung die Flüssigkeitsmenge in der Reaktionszone durch Ablassen senkt. Es wird dann so lange eingetragen, bis das Flüssigkeitsniveau die Düsenöffnung erreicht hat.

Hierbei steigt das Flüssigkeitsniveau nicht durch vermehrte Zufuhr von flüssigem Reaktionsgemisch, sondern durch vermehre Gasaufnahme, das in feiner Verteilung in der Flüssigkeit vorliegt. Vorteilhaft hält man in dem flüssigen Reaktionsgemisch in der Reaktionszone einen Gasgehalt (Gas-hold-up) von 5 bis 50%, bezogen auf das flüssige Reaktionsgemisch, ein. Die Frisch-Gaszufuhr kann außer über die Gasphase über der Reaktionszone auch zusätzlich an der Stelle, wo das Reaktionsgemisch umgelenkt wird, vorteilhaft unter der Umlenkplatte erfolgen. Darüber hinaus ist es auch möglich, Gasgemisch in den die Umlaufzone umgebenden Ringraum einzuspeisen.

Es hat sich ferner als vorteilhaft erwiesen, wenn man in der Reaktionszone eine Leistungsdichte von 1 bis 50, insbesondere 5 bis 30 kW/m³ in der Reaktionszone befindliches flüssiges Reaktionsgemisch einhält. Die nötige Leistungsdichte wird durch die Flüssigkeitsstrahlen in das Reaktionsgemisch eingebracht. Sie ist eine Funktion der Umwälzmenge und des Druckabfalls an der Düsenöffnung.

Unmittelbar unterhalb der Reaktionszone schließt sich eine Trennzone an, in der sich mitgerissene Gasblasen von flüssigem Reaktionsgemisch abscheiden. Die Gasblasen wandern entgegen der Flüssigkeitsströmung nach oben, während das flüssige Reaktionsgemisch abgezogen und wieder zu der Düsenöffnung oder den Düsenöffnungen zurückgeführt wird.

Bei dem beanspruchten Verfahren wird also ein Strahlantrieb benutzt, bei dem die. Düse von oben nach unten arbeitet. Der Treibstrahl bringt Energie für den Umlauf im Reaktor. Da die Düsenmündung an der Flüssigkeitsoberfläche liegt, trägt der Treibstrahl Gas in die Flüssigkeit ein, das im Umlaufrohr sehr fein dispergiert wird. Dadurch wird der Schlupf zwischen Flüssigkeit und Gas sehr klein und eine hohe Umlaufgeschwindigkeit erzeugt.

Der größte Teil der in der ringförmigen Zone aufsteigenden Gasblasen wird von der Flüssigkeitsströmung mit in die Umlaufzone gerissen. Im Gleichgewichtszustand trägt der Treibstrahl deshalb nur so viel Gas ein, daß der Flüssigkeitsspiegel an die Düsenöffnung reicht. Damit wird auch der Gasgehalt in der Flüssigkeit begrenzt und kann nie so groß werden, daß der Umlauf der Gas-Flüssigkeits-Strömung im Reaktor in Gefahr kommen kann, durch die Bildung von Großblasen zusammenzubrechen. Der Vorteil des erfindungsgemäßen Verfahrens liegt demnach in der gleichmäßigen Verteilung von Gas und auch des suspendierten Katalysators in der gesamten Reaktionszone. Beim Abstellen des Reaktors kann die Düsenöffnung nicht durch abgesetzten Katalysator verstopfen.

Das Verfahren eignet sich für kontinuierliche und diskontinuierliche Arbeitsweisen. Bei der kontinuierlichen Fahrweise wird die umzusetzende wäßrige Mineralsäure, gegebenenfalls im Gemisch mit Hydroxylaminsalzen, in die Reaktionszone stetig eingeführt. Das Reaktionsprodukt entnimmt man stetig dem äußeren Flüssigkeitsumlauf. Mit der Reaktionsflüssigkeit entnommene Katalysatormengen werden durch entsprechende Katalysatorzugaben zum Flüssigkeitszulauf ergänzt. Der gewünschte Gas-hold-up kann durch Variation des Flüssigkeitszulaufs oder -ablaufs geregelt werden. Der Gas-hold-up kann z.B. durch Bestimmen der scheinbaren Dichte des Flüssigkeits-Feststoff-Gasgemisches oder der Menge der Flüssigkeit im Reaktionsraum gemessen werden.

Hydroxylammoniumsalze werden zur Herstellung von Cyclohexanonoxim, einem Vorprodukt zur Herstellung von Caprolactam, verwendet.

Das Verfahren nach der Erfindung sei an folgenden Beispielen veranschaulicht.

### Beispiele

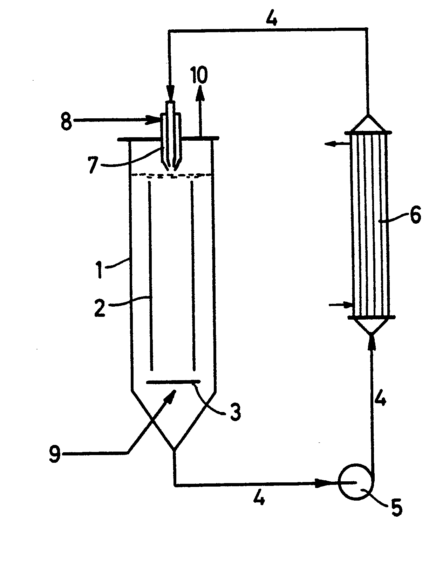

In einer Tauchstrahlvorrichtung gemäß Figur 1, bestehend aus einem Reaktorgefäß (1) mit Umlaufrohr (2) und Prallplatte (3) und einer außenliegenden Flüssigkeitsumwälzung (4) mit Pumpe (5) und Wärmetauscher (6) zur Abführung der Reaktionswärme sowie Tauchstrahldüse (7), Gaszuführung (8, 9) und Gasabführung (10), werden 4, 3 n Schwefelsäure und je Liter eingesetzte Schwefelsäure 40 g eines Platin-Graphit-Katalysators mit einem Gehalt von 0,5 Gew.% Pt vorgelegt. Nach Inbetriebnahme der Umwälzung entnimmt man dem Reaktor soviel Reaktionsmedium, daß der gewünschte Gas-hold-up erreicht wird. Die umgepumpte Suspension wird über die Tauchstrahldüse in den Reaktor entspannt.

Nach Verdrängen der Luft mit $H_2$ führt man bei 40°C ein aus 36 Vol.% NO und 63 Vol.% $H_2$ (Rest Intergas) bestehendes Gasgemisch in den Reaktor ein. Das entweichende Abgas wird gemessen und analysiert. Wenn die Schwefelsäure in der Reaktionslösung fast verbraucht ist, beendet man die Reaktion, trennt die Hydroxylaminlösung vom Katalysator ab und bestimmt die gebildete Menge an Hydroxylamin.

|  | Beispiel 1 | Beispiel 2 |
|---|---|---|
| Reaktionsraum | 40 | 21,5 l |
| abelassene Flüssigkeitsmenge | 15 | 8,5 l |
| Flüssigkeit im Reaktionsraum | 25 | 12 l |
| $H_2SO_4$-Menge in Gesamtsystem | 45 | 26,5 l |
| Gas-hold-up | 37,5 | 39,5 % |
| Umwälzmenge | 5,0 | 7,8 m³/h |
| Druckabfall an der Düsenöffnung | 2,0 | 1,4 bar |
| Leistungsdichte | 11 | 23,5 KW/m³ Flüssigkeit in der Reaktionszone |
| Ort der Gaseinführung | Düsenöffnung | Prallplatte |
| Reaktionszeit | 10,0 | 7,5 Stunden |
| Endkonzentr. der Lösung | 0,6 | 0,7 n $H_2SO_4$ |
| umgesetzte NO-Menge | 4037 | 2327 N l |
| erzeugte $NH_2OH$-Menge | 4950 | 2756 g |
| Raum-Zeit-Ausbeute | 0,72 | 1,1 $\dfrac{\text{mol umges, NO}}{\text{Std, l Fl i.RR}}$ |
| $NH_2OH$-Ausbeute bez. umges. NO | 83,3 | 80,4 % |

**Patentansprüche**

1. Verfahren zur Herstellung von Hydroxylammoniumsalzen durch katalytische Reduktion von Stickstoffmonoxid mit Wasserstoff in verdünnten wäßrigen Lösungen von Mineralsäuren in Gegenwart von suspendierten Platinkatalysatoren bei erhöhter Temperatur, wobei man das Reaktionsgemisch im Kreis führt, *dadurch gekennzeichnet,* daß man das im Gasraum oberhalb der Reaktionszone befindliche Stickstoffmonoxid und Wasserstoff enthaltende Gasgemisch durch mindestens einen von oben nach unten gerichteten aus einer Düsenöffnung austretenden Flüssigkeitsstrahl der im Kreis geführten Reaktionsmischung in mindestens eine sich in der Reaktionszone befindliche, beidseitig offene Umlaufzone, die sich in Richtung des eintretenden Flüssigkeitsstrahles erstreckt und vollständig vom Reaktionsgemisch bedeckt ist, einbringt, das unten aus der Umlaufzone austretende nicht umgesetzte Gase enthaltende Reaktionsgemisch umlenkt, in der die Umlaufzone außen umgebenden ringförmigen Zone nach oben leitet und gleichzeitig aus einer unter der Reaktionszone befindlichen Trennzone gasarmes Reaktionsgemisch zurückführt.

2. Verfahren nach Anspruch 1, *dadurch gekennzeichnet,* daß man Stickstoffmonoxid und Wasserstoff an der Düsenöffnung zuführt.

3. Verfahren nach Anspruch 1, *dadurch gekennzeichnet,* daß man Stickstoffmonoxid und Wasserstoff dicht unterhalb der Stelle, an der das aus der Umlaufzone austretende Reaktionsgemisch umgelenkt wird, zuführt.

4. Verfahren nach den Ansprüchen 1 bis 3, *dadurch gekennzeichnet,* daß die Reaktionsmischung in der Reaktionszone einen Gas-Gehalt von 5 bis 50 Vol.% hat.

5. Verfahren nach den Ansprüchen 1 bis 4, *dadurch gekennzeichnet,* daß man in der Reaktionszone eine Leistungsdichte von 1 bis 50 kW/m³ flüssiges Reaktionsgemisch in der Reaktionszone einhält.

**Claims**

1. A process for the manufacture of hydroxylammonium salts by the catalytic reduction of nitric oxide with hydrogen in a dilute aqueous solution of a mineral acid in the

7    0 000 902    8

presence of a suspended platinum catalyst at an elevated temperature, wherein the reaction mixture is recycled, characterized in that the gas mixture, containing nitric oxide and hydrogen, present in the gas space above the reaction zone is introduced, by means of one or more downwardly directed jets of liquid, consisting of the recycled reaction mixture and issuing from a nozzle orifice, into one or more circulation zones which are present in the reaction zone, are open at both sides, extend in the direction of the entering jet of liquid and are completely covered by the reaction mixture, the reaction mixture leaving the bottom of the circulation zone and containing unconverted gases is deflected, passed upwards in the annular zone externally surrounding the circulation zone, and at the same time reaction mixture of low gas content is recycled from a separation zone located under the reaction zone.

2. A process as claimed in claim 1, characterized in that nitric oxide and hydrogen are fed to the nozzle orifice.

3. A process as claimed in claim 1, characterized in that nitric oxide and hydrogen are fed to a point just below the point at which the reaction mixture, issuing from the circulation zone is deflected.

4. A process as claimed in claims 1 to 3, characterized in that the reaction mixture in the reaction zone contains from 5 to 50% by volume of gas.

5. A process as claimed in claims 1 to 4, characterized in that an energy density of from 1 to 50 kW/m³ of liquid reaction mixture in the reaction zone is maintained in the said zone.

**Revendications**

1. Procédé de préparation de sels d'hydroxylammonium par réduction catalysée de l'oxyde azotique par l'hydrogène dans une solution aqueuse diluée d'un acide minéral à température accrue et en présence d'un catalyseur au platine en suspension, le mélange réactionnel circulant en circuit, caractérisé en ce que l'on fait passer le mélange gazeux, contenant de l'oxyde azotique et de l'hydrogène, se trouvant dans la partie du réacteur surmontant la zone de réaction et remplie de produits gazeux, à l'aide d'au moins un jet de la solution réactionnelle circulant en circuit, injecté de haut en bas par une tuyère, dans au moins une zone de circulation s'étendant dans la direction d'injection du jet de liquide et ouverte des deux côtés, située dans la zone de réaction et entièrement noyée dans le mélange réactionnel, tandis que le mélange réactionnel contenant les produits gazeux n'ayant pas réagi, sortant de l'extrémité inférieure de la zone de circulation, est dévié et ramené à travers une zone annulaire, entourant la zone de circulation, dans la partie supérieure du réacteur avec recyclage simultané de mélange réactionnel pauvre en produits gazeux, provenant d'une zone de séparation disposée sous la zone de réaction.

2. Procédé suivant la revendication 1, caractérisé en ce que l'introduction de l'oxyde azotique et de l'hydrogène s'effectue au niveau de l'embouchure de la tuyère d'injection.

3. Procédé suivant la revendication 1, caractérisé en ce que l'introduction de l'oxyde azotique et de l'hydrogène s'effectue à un niveau disposé juste en dessous de l'endroit de déviation du mélange réactionnel sortant de la zone de circulation.

4. Procédé suivant l'une quelconque des revendications 1 à 3, caractérisé en ce que, dans la zone de réaction, le mélange réactionnel contient entre 5 et 50% en volume de produits gazeux.

5. Procédé suivant l'une quelconque des revendications 1 à 4, caractérisé en ce que, dans la zone de réaction, la densité de puissance est maintenue entre 1 et 50 kilowatts par m³ de mélange réactionnel liquide contenu dans cette zone de réaction.

6